# EUROPEAN PATENT APPLICATION

(11) **EP 4 088 566 A1**
(43) Date of publication of application: **16.11.2022**
(21) Application number: 22172774.6
(22) Date of filing: 11.05.2022
(51) Int. Cl.: A01G 13/02, A01G 22/10

(54) **AGRICULTURAL MULCH FILM**

(30) Priority: 12.05.2021 EP 21382439
(71) Applicant: Reyenvas, S.A., 41500 Alcalá de Guadaira, Sevilla (ES)
(72) Inventor: REDONDO MURCIA, Antonio, Alcalá de Guadaíra, Sevilla (ES); ALVAREZ BALLESTEROS, Juan Andrés, Torrelavega, CANTABRIA (ES)
(74) Representative: de Rooij, Mathieu Julien

(57) **Abstract**

The present disclosure relates to agricultural mulch films for asparagus crops and methods for using them. The invention concerns an agricultural mulch film (100) is configured to apply a force to a tip (210) of an asparagus (200) such that the tip (210) keeps its shape and a spear (205) of the asparagus (200) remains straight. The efficiency and the frequency of asparagus collection may be improved.

## Description

The present disclosure relates to agricultural mulch films, and more in particular to agricultural mulch films for asparagus crops.

### BACKGROUND

Mulch films are widely used in agricultural applications. Agricultural mulch films may be extended over a cultivation area. Some weight may be placed on the film, e.g. by burying the sides of the film or by placing soil or mass in pockets incorporated in the film, to keep the film in place. Agricultural mulch films protect crops and soil from weathering, and help to avoid or at least reduce loss of water and fertilizers in the soil. They are also used to decrease the presence of weeds and regulate the interaction of sunlight with the crop and the soil. The sunlight and heat received by the crop and the soil has a direct influence on crop yield, e.g. the amount of crop that may be harvested, and on the moment when it can be harvested (precocity) and its quality.

Different types of agricultural mulch films are currently available, and a type of mulch film may be selected depending on a desired outcome. For instance, a transparent film maximizes the sunlight that reaches the soil, increasing soil temperature and boosting plant growth. An opaque or semi-opaque film, e.g. a black mulch film, hampers weeds growth and keeps the soil warm. A photoselective mulch film lets specific radiation pass through the film. For example, only photosynthetically active radiation (PAR) may pass through the photoselective film.

Agricultural mulch films may also be configured as bicolor films. A bicolor film has two faces of different colors. For instance, a bicolor film may have a black face and a white, silver, green, brown or grey face. In general, any combination of colors is possible. If one face is white or silver, placing this face upwards, i.e. facing the sky and/or the sunlight, helps to reflect the sunlight that would irradiate the crop and/or decrease the temperature below the film. An additional lower black film may render the film opaque.

Mulch films may be used for cultivation of asparagus crops. When the asparagus reach a certain height, they may be cut and collected. Green asparagus may be cut above and close to the ground once a height of the asparagus has for example reached 15-20 cm above the ground, whereas white asparagus may be cut about 15 cm below the ground once a height of the asparagus has for example reached 1-3 cm above the ground. Inspecting the asparagus for collecting the ones with appropriate features, for example asparagus with a suitable height and shape, may be performed each three of four days for green asparagus, and each two days or even each day for white asparagus, to locate and collect the asparagus with sufficient quality. White asparagus may acquire a violet coloring and their tips may open if the frequency of collection is higher than one or two days.

The frequency of collection may be rather high and the process is labor intensive. In addition, the process may not be very efficient, as only some or a small selection of the asparagus that are inspected may have a suitable height and shape for collection.

### SUMMARY

In an aspect of the present disclosure, an agricultural mulch film is provided. The film is configured to apply a force to a tip of an asparagus such that the tip keeps its shape and a spear of the asparagus remains straight.

According to this aspect, a mulch film may apply a sufficiently high force or pressure to the asparagus tips to avoid their opening and a sufficiently low force or pressure for avoiding spear bending. A number of asparagus meeting shape and quality requirements may be increased, and asparagus collection may be more efficient. Also, as such a film may keep the asparagus in good and suitable conditions during more time, the frequency of collection may be reduced. More asparagus of higher quality may be obtained with less collection events. In some examples, collection of white asparagus may be spaced three days (72 hours) or more. In some examples, collection of green asparagus may be spaced five days (120 hours) or more.

In examples, the film may enable a spear of an asparagus to remain straight for a period of at least 24 hours, and specifically for a period of at least of 48 hours. In these or other examples, an asparagus, and in particular a green asparagus, may remain straight until it reaches a height of at least 10 cm, specifically at least 12 cm, more specifically about 15 cm or more above the ground.

The film may be configured to wrap the tip of the asparagus and at least a portion of the spear of the asparagus when the asparagus contacts the film and continues its growth. A film wrapping the asparagus may keep them protected and in adequate conditions for collection longer.

In another aspect of the disclosure, an agricultural mulch film may have a Young's modulus of less than 100 MPa in at least one of a machine direction and a transverse direction of the film, and specifically between 30 and 85 MPa in each direction. Young's modulus is also known as modulus of elasticity in tension.

Still in another aspect of the disclosure, an agricultural mulch film may have a secant modulus at 2% of less than 90 MPa in at least one of a machine direction and a transverse direction of the film, and specifically between 30 and 85 MPa in each direction. A secant modulus at 2% may be understood as the slope of the stress/strain curve obtained by using two points of the stress/curve, namely a strain of 0% as a first point and a strain of 2% as a second point.

Still in another aspect of the disclosure, an agricultural mulch film may have a yield strength of less than 6 MPa in a transverse direction of the film.

Still in another aspect of the disclosure, an agricultural mulch film may have an elongation at yield of more than 110% in a longitudinal direction of the film.

A mulch film with one or more values of the parameters according to the above aspects may enable an asparagus to keep its spear straight, i.e. unbent, and its tip closed once it emerges and grows above the ground. The one or more values be particularly suitable for mulch films having a thickness of less than 200 microns, for example between 10 and 100 microns, and more in particular between 20 and 80 microns.

As a mulch film may have one or more of the values of the parameters indicated above in the ranges indicated above, a mulch film may have a Young's modulus as indicated above only, or a secant modulus at 2% as indicated above only, or a yield strength as indicated above only, or an elongation at yield as indicated above only, or a combination of two or more of the values of these parameters. In some examples, a mulch film may have all the parameters as indicated above in the ranges indicated above.

Still in an aspect of the present disclosure, a method for using an agricultural mulch film for asparagus cultivation as escribed herein is provided. The method comprises extending the mulch film over a cultivation area of asparagus. The mulch film is configured to apply a force to the tip of an asparagus such that the tip keeps its shape and the spear of the asparagus remains straight when the tip emerges from the soil and contacts the film.

The film may have one or more of the parameters mentioned above in the ranges also indicated above.

### BRIEF DESCRIPTION OF THE DRAWINGS

Non-limiting examples of the present disclosure will be described in the following, with reference to the appended figures, in which:
Figure 1 schematically illustrates an agricultural mulch film according to the invention under with an asparagus grows.
Figure 2 schematically illustrates a cross-section of the agricultural mulch film of figure 1 according to an example.
Figure 3 schematically illustrates a cross-section of the agricultural mulch film of figure 1 according to another example.
Figure 4 schematically illustrates a top view of an agricultural mulch film according to an example.
Figure 5 schematically illustrates a cross-section of the agricultural mulch of figure 4.
Figure 6 schematically illustrates an example of a stress-strain curve and some points therein.

### DETAILED DESCRIPTION OF EXAMPLES

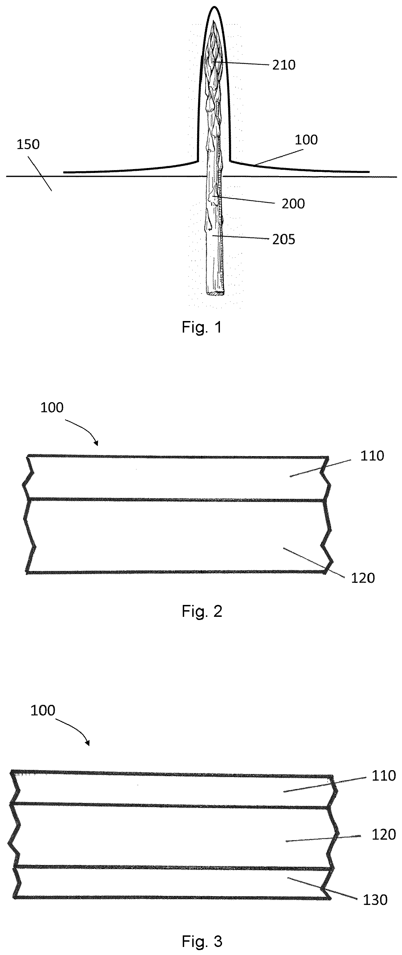

Figure 1 schematically illustrates an asparagus 200 pushing an agricultural mulch film 100 for asparagus cultivation according to an aspect of the present disclosure. The mulch film 100 is configured to apply a force to a tip 210 of an asparagus 200 such that the tip 210 keeps its shape and a spear 205 of the asparagus 200 remains straight.

A straight spear and a closed tip are quality indicators of an asparagus. This may apply to both white and green asparagus. In this way, as the number of asparagus meeting the requirements of quality for being collected may be increased, the efficiency of asparagus collection may also be increased. In examples, the asparagus may reach a height of 10 cm, 12 cm or about 15 cm or more without bending of the spear or opening of the tip. Therefore, the frequency of collection may be decreased from one-two days to three or more days for white asparagus and from three-four days to five or more days for green asparagus.

In terms of quality, the coloring, overall shape and width (caliber) may also be improved with such a film.

The film 100 may be configured to wrap the tip 210 of the asparagus 200 and at least a portion of the spear 205 of the asparagus 200 when the asparagus contacts the film 100 and continues its growth, as schematically illustrated in figure 1.

When an asparagus 200 is below the ground, its tip 210 remains closed for pushing the surrounding soil out of the way and advancing towards the surface. The spear 205 is also straight and grows vertically towards the surface. When the tip 210 is out, i.e. above the ground, it may start to open and separate in smaller and possibly divergent portions if the pressure on it is not sufficiently high. If on the contrary the pressure on the tip 210 is excessive, the spear 205 of the asparagus 200 may bend. Opening of the tip 210 and bending of the spear 205 are deemed to decrease the quality of the asparagus. If the mulch film 100 is configured to wrap the asparagus, more asparagus of good quality may be obtained and crop efficiency may be increased. As the mulch film 100 may keep the asparagus straight for a longer period of time when it has protruded from the soil, frequency of collection may be reduced.

The mulch film 100 may be configured to mimic, with regard to force or pressure, a behavior of soil surrounding the asparagus. For an asparagus 100, the pressure exerted by the mulch film may thus resemble a situation as if it remained inside the soil 150, i.e. below the ground, when the asparagus 100 contacts the film 100 and continues its growth. As explained above, if the mulch film is able to apply a force or pressure substantially equal or similar to the one experienced by the asparagus when it is still below the ground, a suitable shape of its tip 210 and spear 205 may be kept and the efficiency and frequency of collection may be improved.

The mulch film 100 may have a Young's modulus of less than 100 MPa in at least one of a machine direction and a transverse direction of the film, and specifically between 30 and 85 MPa, and more specifically in each direction. In some examples, a Young's modulus in a machine direction may be between 40 and 85 MPa. In these or other examples, a Young's modulus in a transverse direction may be between 35 and 60 MPa.

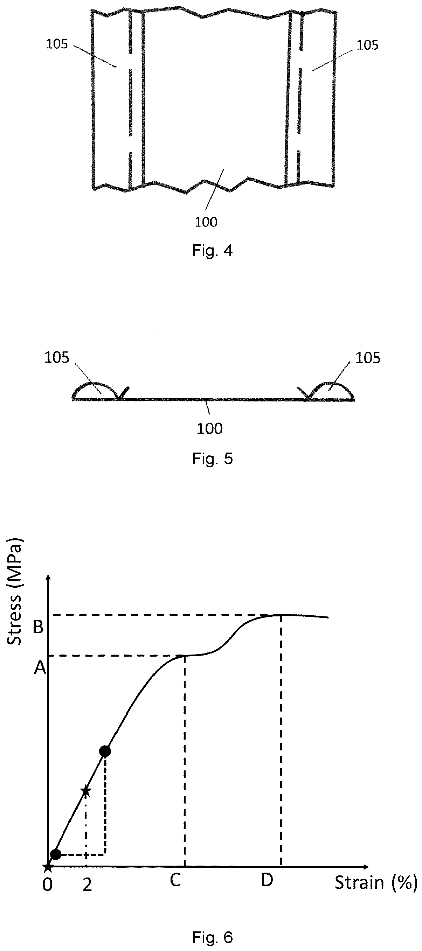

A Young's modulus may be calculated as the slope of a stress-strain curve between two specific values of strain (in an elastic region, before the yield point (A, C) is reached). In figure 6, two schematic values of strain which may be used to calculate the Young's modulus have been indicated by two black circles. In figure 6, stress is expressed in MPa, and strain is expressed as a percentage. In other examples, stress may be expressed as a dimensionless magnitude (i.e. without multiplying stress values by 100 to convert to percentages).

A stress-strain curve may be obtained by performing a tensile test under standard conditions. For example, a standard for the determination of tensile properties in plastics, in particular the test conditions for films and sheets, is the standard EN ISO 527-3:2018, which was published in December 2018. Therein, the shape and the dimensions of different types of specimens that could be used are specified.

Another standard for the determination of tensile properties in plastics, in particular the general principles, is the standard EN ISO 527-1:2019, published in September 2019. This standard indicates to conduct testing in a same atmosphere used for conditioning a specimen, unless otherwise agreed upon by the parties. Regarding the conditioning, a test specimen shall be conditioned as specified in the appropriate standard for the material concerned. In the absence of this information, the most appropriate set of conditions from ISO 291:2008, published in May 2008, shall be selected, and the conditioning time is to be at least 16 h, unless otherwise agreed upon by the parties. The preferred atmosphere is (23 ± 2) °C and (50 ± 10) % of relative humidity, except when the properties of the material are known to be insensitive to moisture, in which case humidity control is unnecessary.

As an asparagus protrudes from the ground and stretches the mulch film, the stretching occurs in multiple directions at the same time. In examples, an elastic modulus in a transverse direction differs less than 30%, and specifically less than 20%, of the elastic modulus in a machine direction. For instance, if a Young's modulus in a machine direction of a film is about 55 MPa, a Young's modulus in a transverse direction of the film may be between 40 and 70 MPa, and specifically between 45 and 65 MPa.

Prior art mulch films have a Young's modulus higher than the mulch films of the present disclosure, for example about 120 MPa, 140 MPa, 160 MPa, 180 MPa or more. Such mulch films may be based for example on low-density polyethylene (LDPE) and/or linear LDPE (LLDPE), and may not provide the advantages of the films according to examples of the current disclosure.

A mulch film 100 with a Young's modulus of less than 100 MPa may enable an asparagus 200 to keep its spear 205 unbent and its tip 210 closed once above the ground. The mulch film 100 may apply a sufficiently high force on the asparagus to prevent the tip 210 from opening and at the same time, the force may not be too high to prevent the spear 205 from bending. This may particularly apply to mulch films 100 having a thickness of less than 200 microns, for example less than 100 microns, and more in particular between 20 and 80 microns.

Again, as a greater number of asparagus may fulfill the collection requirements and may do so for a longer period of time, the frequency of asparagus collection may be reduced, and the efficiency of the collection process increased.

In addition, it should be noted that asparagus 200 grown below a mulch film 100 as described herein may have an increased width. Wider asparagus, i.e. asparagus with a greater caliber, may be seen as asparagus of higher quality than narrower asparagus.

The above advantages may also be provided by an agricultural mulch film 100 which has, in addition or alternatively to a Young's modulus below 100 MPa, one or more of the following parameters in the indicated ranges:

Additionally or alternatively, a mulch film 100 may have a secant modulus at 2% of less than 90 MPa in at least one of a machine direction and a transverse direction of the film, and specifically between 30 and 85 MPa in each direction. In some examples, a secant modulus at 2% in a machine direction may be between 40 and 80 MPa. In these or other examples, a secant modulus at 2% in a transverse direction may be between 40 and 60 MPa.

A secant modulus at 2% may be calculated as the slope of a stress-strain curve between a strain value of 0% and a strain value of 2%. In figure 6, these two points for obtaining a secant modulus at 2% have been indicated by two black stars.

Prior art mulch films have a modulus at 2% higher than the mulch films of the present disclosure, for example about 120 MPa, 140 MPa, 160 MPa, 180 MPa or more. Again, such mulch films may not provide the advantages of examples of the mulch films of the present disclosure.

Additionally or alternatively, a mulch film 100 may have a yield strength of less than 60 MPa in a transverse direction of the film.

A yield strength is a value of the stress, for example in MPa, at a yield point. A schematical value of a yield strength has been indicated with the letter "A" in figure 6. A yield point is the point in a stress-strain curve beyond at which an increase in strain is not caused by an increase in stress. Beyond this point, the plastic material stretches briefly without a noticeable increase in stress. The ratio between increased length and the initial length of the specimen at this point may be known as elongation at yield. This point is represented by letter "C" in figure 6.

It has been found that the yield strength in the transverse direction is of more relevance than the yield strength in the machine direction. Without wishing to be bound by theory, it is believed that this is due to the relatively small distance of the asparagus to the point of anchoring or fixation in the transverse direction as compared to the machine direction.

Prior art mulch films may have a tensile stress at a yield point higher than the mulch films of the present disclosure, for example 8, 9, 10 or more MPa in a transverse direction of the film. Prior art mulch films may not provide the advantages of examples of the mulch films of the present disclosure.

Additionally or alternatively, a mulch film 100 may have an elongation at yield above 110% in a machine direction, and specifically between 120 and 140 % in the machine direction.

Prior art mulch films may have an elongation at yield lower than the mulch films of the present disclosure, for example 100%, 90%, 80% or less in a machine direction of the film. Prior art mulch films may not provide the advantages of the current invention.

The mulch film 100 may comprise one or more layers. In some examples, the mulch film 100 may be a monolayer film. In some other examples, the mulch film 100 may be a multilayer film. The thickness of two or more layers included in the mulch film 100 may be different or may be substantially the same.

A layer may be regarded as a portion or section of a film which is arranged on top or below one or more further layers. A layer generally extends over the entire length and width of the film.

Figure 2 schematically illustrates an example of a multilayer mulch film. The agricultural mulch film 100 may comprise a first layer 110 and a second layer 120. The first layer 110 may be a top layer, i.e. the layer of the mulch film 100 configured to be placed facing upwards, for example facing the sky and/or the sunlight. The second layer 120 may be a bottom layer, i.e. the layer configured to be placed facing downwards, for example facing the soil.

Figure 3 schematically illustrates another example of a multilayer film. In this example, the mulch film 100 comprises three layers 110, 120, 130. The first layer 110 is a top layer, the second layer 120 is a middle layer and the third layer 130 is a bottom layer. The upper and bottom layers have a same or similar thickness, and the middle layer is thicker than the other two layers.

In general, for use with white asparagus, at least one of the layers of the mulch film 100, including all the layers of the film, may be opaque or semi-opaque. Such a layer or film may prevent that, once out of the soil 150, the white tips 210 and spears 205 of the asparagus adopt a green-purple color.

In other examples, all the layers of the film may be transparent or semi-transparent. Such a layer or film may maximize the sunlight that reaches the soil, increasing soil temperature and boosting asparagus growth A translucent or transparent mulch film may be particularly useful for green asparagus cultivation.

A bicolor mulch film may also be used for asparagus cultivation. For example, a mulch film may be black/white (i.e., a face is white and the opposite face is black), green/black or green/white. Other bicolor films are possible.

If the mulch film includes more than one layer, one of the layers may be configured to degrade faster than another of the layers of the film 100.

Having layers with different times of degradation may enable modifying and controlling light and heat received by the asparagus in an efficient way. The time of degradation of the layers may be specifically adapted to the asparagus rhythm of grow and to climate conditions. The latitude where the asparagus may be grown can also considered.

The mulch film 100 may have one or more layers which are biodegradable and/or compostable.

Degradable may refer to a material, layer or film that is configured to degrade, i.e. break-down, erode, deteriorate or fragment during its normal use. In examples, degradable may mean that the layer or material will degrade within one year when exposed to a foreseen environment and weather conditions, and more specifically will degrade within nine months or less. These times may enable one or more layers to degrade according to the light and/or temperature needs of the asparagus.

Biodegradable may refer to a material, layer or film that is configured to erode, decompose or degrade by the action of microorganisms, such as bacteria and fungi. Compostable may refer to a material, e.g. an organic material, layer or film that can, through a process of decomposition under specific conditions, be turned into nutrient-rich soil or fertilizer. Biodegradable layers or films may decompose in soil, and collecting them or a portion of them may not be necessary.

A layer may degrade due to its composition, e.g. due to being made of biodegradable materials. Some biodegradable materials may further be compostable. A layer may also degrade due to the action of ultraviolet (UV) radiation.

One or more layers of the film may substantially be non-(bio)degradable or may barely be (bio)degradable. In some of these examples, one or more layers may be made of or may be based on polyolefinic materials. Polyolefinic materials may increase the service life of the layer including them. A non-biodegradable layer or less biodegradable layer may have a degradation time that is longer than a degradation time of a degradable layer, e.g. more than one year.

The proportion of biodegradable, compostable and/or polyolefinic materials included in each layer may be adjusted to the desired duration of that layer of the mulch film.

A biodegradable layer may include one or more of the following materials: polylactic acid (PLA), poly(butylene adipate-co-tereftalate) (PBAT), polyhydroxyalkanoates (PHA), polyhydroxybutyrate (PHB), polyhydroxyvaleriate (PHV), polyhydroxyhexanoate (PHH), butyrate-co-valerate (PHBV or P(3HB-co-3HV)), butyrate-co-hexanoate (PHBH or P(3HB-co-3HH)), starch and/or starch blends, poly (butylene succinate) (PBS), poly (butylene succinate-co-adipate) (PBSA) and polymers derived from proteins, e.g. milk proteins.

A non-(bio)degradable or less (bio)degradable layer of the mulch film 100 may include one or more of the following materials: polyethylene (PE), PE copolymers, polypropylene (PP), PP copolymers, ethylene vinyl acetate (EVA), ethylene butyl acrylate (EBA), polyolefin plastomers (POP), olefinic elastomers e.g. ethylene propylene diene monomer (EPDM), styrene-butadiene copolymers (SBS), polyamide (PA), ethylene vinyl alcohol (EVOH), polyvinyl alcohol (PVOH), polyethylene terephthalate (PET) and adhesive polymers for ensuring adhesion between layers.

Examples of mulch films may include barrier layers comprising e.g. EVOH, or copolymers thereof. Such barrier layers may be formed in the film as one or more of the central layers, and generally not the outer layers.

In some examples, amounts of PBAT, PLA and/or starch may be used to adjust the biodegradability of a layer. The proportions of these materials may affect a degradation time and/or degradation speed of a layer. For instance, by varying the proportions of these materials, a degradation time between one and three months may be obtained.

The number of layers, the materials used for each layer and the thickness of each layer may be selected according to desired properties of each layer, e.g. in terms of biodegradability. Additives may also be included to obtain the desired properties of a layer. A mulch film 100 may have one, two, three or more than three layers.

In some examples, a (total) thickness of the mulch film 100 may be between 10-200 microns, for example between 10 and 100 microns, and more in particular between 20 and 80 microns. In such examples, the mulch film 100 may have the following mechanical properties:

**Table 1:**

| EXAMPLE 1 OF MECHANICAL PROPERTIES | | | |
|---|---|---|---|
| Magnitude | Value | Unit | Standard |
| Thickness | 10 - 200 | Microns | ISO 4591:1992 |

| Tensile strength at break | | | |
|---|---|---|---|
| Longitudinal direction | 14-35 | MPa | EN ISO 527-3:2018 |
| Transverse direction | 14-40 | MPa | EN ISO 527-3:2018 |

| Tensile strain at break | | | |
|---|---|---|---|
| Longitudinal direction | 80 - 1000 | % | EN ISO 527-3:2018 |
| Transverse direction | 100 - 1200 | % | EN ISO 527-3:2018 |

| Impact resistance | | | |
|---|---|---|---|
| Face | \| 100 - 1500 | G | ISO 7765-1:1988 |

| Young's modulus | | | |
|---|---|---|---|
| Longitudinal direction | < 100 | MPa | EN ISO 527-3:2018 |
| Transverse direction | < 100 | MPa | EN ISO 527-3:2018 |

ISO 4591:1992 was published in January 1992 and ISO 7765-1:1988 was published in December 1988.

A value of a tensile strength at break has been schematically illustrated in figure 6 with letter "B". Point "B" may also be known as ultimate strength. The ultimate strength is the maximum stress that a material can withstand while being pulled before breaking. Also, a value of a tensile strain at break has been schematically illustrated in figure 6 with letter "D".

The above values for the Young's modulus may be particularly measured under test conditions EN ISO 527-3:2018/2/500. Number 2 in the numbering of the standard refers to the type of specimen and the number 500 refers to the test speed in millimeters per minute. The slope of the stress/strain curve may be measured in a strain interval between 0.3 and 3.2%. Such a strain interval may enable better precision and reproducibility than a lower strain interval, e.g. a strain interval between 0.05 and 0.25%.

In one example, a three-layer mulch film 100 falling within the above table of mechanical properties may have a total thickness of 75 microns. The mulch film may have a Young's modulus of about 63 MPa (both in the longitudinal and in the transverse direction). The thicknesses and polymers included in the layer of the film of this example may be as follows:

**Table 2:**

| | | | |
|---|---|---|---|
| Layer thickness (microns) | 30 | 34 | 11 |
| Polymer: | mLLDPE and POP | EVA (19% VA) | PBAT |

Accordingly, a first layer, for example a top layer, may have a thickness of 11 microns and may comprise PBAT. A second layer, for example a middle layer, may have a thickness of 34 microns and may comprise EVA (19% Vinyl Acetate). The middle layer may serve as an oxygen barrier. The content of vinyl acetate in the middle layer may determine water permeability. A third layer, for example a bottom layer, may have a thickness of 30 microns and may comprise metallocene LLDPE (mLLDPE) and POP (polyolefin plastomer).

In the above example, and in accordance with standard EN ISO 527-3:2018, a secant modulus at 2% of the film may be about 60 MPa in both a longitudinal and a transversal direction. The film may have a yield strength in a transverse direction of about 6.2 MPa and an elongation at yield of about 113%.

In another example complying with the above table of mechanical properties, a mulch film 100 may have five layers and a total thickness of 30 microns. The mulch film may have a Young's modulus of about 42 MPa (both in the longitudinal and in the transverse direction). The thicknesses and polymers included in the layer of the film of this example may be as follows:

**Table 3:**

| | | | | | |
|---|---|---|---|---|---|
| Layer thickness (microns) | 4.5 | 9.0 | 3.0 | 9.0 | 4.5 |
| Polymer: | mLLDPE | EVA (19% VA) | LLDPE | EVA (19% VA) | mLLDPE |

In the above example, and in accordance with standard EN ISO 527-3:2018, a secant modulus at 2% of the film may be about 48 MPa in a transversal direction, and about 40 MPa in a longitudinal direction. The film may have a yield strength in a transverse direction of about 3.7 MPa and an elongation at yield of about 121%.

Additives and colorants may be added to the mulch film of the two above examples.

In some other examples, the mulch film 100 may have a (total) thickness of between 10-200 microns, for example between 10 and 100 microns, and more in particular between 20 and 80 microns, and the mulch film 100 may have the following mechanical properties:

**Table 4:**

| EXAMPLE 2 OF MECHANICAL PROPERTIES | | | |
|---|---|---|---|
| Magnitude | Value | Unit | Standard |
| Thickness | 10 - 200 | Microns | ISO 4591:1992 |

| Tensile strength at break | | | |
|---|---|---|---|
| Longitudinal direction | 14-35 | MPa | EN ISO 527-3:2018 |
| Transverse direction | 14-40 | MPa | EN ISO 527-3:2018 |

| Tensile strain at break | | | |
|---|---|---|---|
| Longitudinal direction | 80 - 1000 | % | EN ISO 527-3:2018 |
| Transverse direction | 100 - 1200 | % | EN ISO 527-3:2018 |

| Impact resistance | | | |
|---|---|---|---|
| Face | 100 - 1500 | G | ISO 7765-1:1988 |

| Secant modulus at 2% | | | |
|---|---|---|---|
| Longitudinal direction | < 80 | MPa | EN ISO 527-3:2018 |
| Transverse direction | < 90 | MPa | EN ISO 527-3:2018 |

The above values for the secant modulus may be particularly measured under test conditions EN ISO 527-3:2018/2/500.

Still in some other examples, the mulch film 100 may have a (total) thickness between 10-200 microns, for example between 10 and 100 microns, and more in particular between 20 and 80 microns, and the mulch film 100 may have the following mechanical properties:

**Table 5:**

| EXAMPLE 3 OF MECHANICAL PROPERTIES | | | |
|---|---|---|---|
| Magnitude | Value | Unit | Standard |
| Thickness | 10 - 200 | Microns | ISO 4591:1992 |

| Tensile strength at break | | | |
|---|---|---|---|
| Longitudinal direction | 14-35 | MPa | EN ISO 527-3:2018 |
| Transverse direction | 14-40 | MPa | EN ISO 527-3:2018 |

| Tensile strain at break | | | |
|---|---|---|---|
| Longitudinal direction | 80 - 1000 | % | EN ISO 527-3:2018 |
| Transverse direction | 100 - 1200 | % | EN ISO 527-3:2018 |

| Impact resistance | | | |
|---|---|---|---|
| Face | 100 - 1500 | G | ISO 7765-1:1988 |

| Elongation at yield | | | |
|---|---|---|---|
| Longitudinal direction | > 110 | % | EN ISO 527-3:2018 |

The above values for the elongation at yield may be particularly measured under test conditions EN ISO 527-3:2018/2/500.

Still in some other examples, the mulch film 100 may have a (total) thickness be between 10-200 microns, for example between 10 and 100 microns, and more in particular between 20 and 80 microns, and the mulch film 100 may have the following mechanical properties:

**Table 6:**

| EXAMPLE 4 OF MECHANICAL PROPERTIES | | | |
|---|---|---|---|
| Magnitude | Value | Unit | Standard |
| Thickness | 10 - 200 | Microns | ISO 4591:1992 |

| Tensile strength at break | | | |
|---|---|---|---|
| Longitudinal direction | 14-35 | MPa | EN ISO 527-3:2018 |
| Transverse direction | 14-40 | MPa | EN ISO 527-3:2018 |

| Tensile strain at break | | | |
|---|---|---|---|
| Longitudinal direction | 80 - 1000 | % | EN ISO 527-3:2018 |
| Transverse direction | 100 - 1200 | % | EN ISO 527-3:2018 |

| Impact resistance | | | |
|---|---|---|---|
| Face | 100 - 1500 | G | ISO 7765-1:1988 |

| Yield strength | | | |
|---|---|---|---|
| Transverse direction | < 6 | MPa | EN ISO 527-3:2018 |

The above values for the yield strength may be particularly measured under test conditions EN ISO 527-3:2018/2/500.

Still in some other examples, the mulch film 100 may have a (total) thickness between 10-200 microns, for example between 10 and 100 microns, and more in particular between 20 and 80 microns, and the mulch film 100 may have the following mechanical properties:

**Table 7:**

| EXAMPLE 5 OF MECHANICAL PROPERTIES | | | |
|---|---|---|---|
| Magnitude | Value | Unit | Standard |
| Thickness | 10 - 200 | Microns | ISO 4591:1992 |

| Tensile strength at break | | | |
|---|---|---|---|
| Longitudinal direction | 14-35 | MPa | EN ISO 527-3:2018 |
| Transverse direction | 14-40 | MPa | EN ISO 527-3:2018 |

| Tensile strain at break | | | |
|---|---|---|---|
| Longitudinal direction | 80 - 1000 | % | EN ISO 527-3:2018 |
| Transverse direction | 100 - 1200 | % | EN ISO 527-3:2018 |

| Impact resistance | | | |
|---|---|---|---|
| Face | 100 - 1500 | G | ISO 7765-1:1988 |

| Young's modulus | | | |
|---|---|---|---|
| Longitudinal direction | < 100 | MPa | EN ISO 527-3:2018 |
| Transverse direction | < 100 | MPa | EN ISO 527-3:2018 |

| Secant modulus at 2% | | | |
|---|---|---|---|
| Longitudinal direction | < 80 | MPa | EN ISO 527-3:2018 |
| Transverse direction | < 90 | MPa | EN ISO 527-3:2018 |

| Elongation at yield | | | |
|---|---|---|---|
| Longitudinal direction | > 110 | 1 % | EN ISO 527-3:2018 |

| Yield strength | | | |
|---|---|---|---|
| Transverse direction | < 6 | MPa | EN ISO 527-3:2018 |

Again, the above values for the Young's modulus, secant modulus at 2%, elongation at yield and yield strength may be particularly measured under test conditions EN ISO 527-3:2018/2/500.

In the examples 1-5 above (i.e. tables 1, 2, 4, 5, 6 and 7), a mulch film may include any suitable materials, for example one or more of the materials mentioned above as examples of materials which could be included in non-(bio)degradable, less (bio)degradable or biodegradable layers. Likewise, in the examples 1-5 above, a mulch film may include any suitable number of layers, for example one, two, or more layers.

A mulch film 100 may further comprise one or more pockets along one or more edges of the film. Figures 4 and 5 schematically illustrate a top view and a cross sectional view, respectively, of an agricultural mulch film 100 with pockets 105 along two of the edges of the mulch film 100, e.g. along a longitudinal direction of the mulch film 100. Pockets 105 may be filled with soil, land, sand and/or moisture absorbing substances to avoid the movement of the mulch film 100 with respect to the cultivation area. In general, any number of pockets may be included to any number of edges or laterals of the mulch film 100.

In some examples, the pockets may be integrally formed with the film.

A mulch film 100 according to any of the examples disclosed herein may be manufactured in several ways. In an example, the mulch film 100 may be manufactured by coextruding two or more layers including any of the materials mentioned above. For example, one or more types of polymer pellets may be melted and shaped into a layer. Additives, such as coloring agents, may be melted with the pellets. Two or more layers may be then coextruded to manufacture the mulch film 100. Such a coextrusion process may include blowing and/or calendaring, as well as orientation of the film. The film may be oriented in a longitudinal direction (machine direction) and/or a transverse direction.

In another example, two or more layers including any of the materials mentioned above may be stacked together by lamination, e.g. adhesive lamination or hot-roll lamination. Other manufacturing processes may be possible.

In another aspect of the invention, a method 300 for using an agricultural mulch film 100 for asparagus cultivation is provided. Any mulch film 100 as described above with respect to figures 1-5 may be used.

The method comprises, at block 310, extending the mulch film 100 over a cultivation area of asparagus 200, an asparagus comprising a tip 210 and a spear 205. The mulch film is configured to apply a force to the tip 210 of an asparagus 200 such that the tip keeps its shape and the spear 205 remains straight when the tip emerges from the soil 150 and contacts the film 100.

The mulch film 100 may provide a suitable balance between exerting a sufficiently high force or pressure on the tips 210 of the asparagus for avoiding the opening of the tips, and a sufficiently low force or pressure for avoiding bending the spears 205 of the asparagus.

Therefore, the quality of the asparagus may be increased and the number of asparagus suitable for collection may also increase. The efficiency of an asparagus crop and asparagus cultivation may be improved. Also, as the asparagus may retain a suitable shape during longer periods of time, the frequency of collection may be decreased.

For example, a time period between two contiguous collections may be of three days or more, in particular between three and eight days, and more in particular between 3 and 5 days. This may particularly apply to white asparagus.

The method may further comprise putting weight in one or more pockets 105 along one or more edges of the film 100. As indicated above, pockets 105 may be filled with soil, earth, sand and/or moisture absorbing substances.

The method may further comprise collecting one or more asparagus 200, wherein collecting comprises picking asparagus whose tips 210 and at least a portion of their spears 205 have been wrapped by the mulch film 100 when growing. Detecting which asparagus are ready for collection and which are not may be facilitated.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. An agricultural mulch film which is configured to:
apply a force to a tip of an asparagus when the asparagus grows and is in contact with the film, wherein
the force is such that the tip of the asparagus keeps its shape and a spear of the asparagus remains straight, and
wherein a tensile stress at yield point of the film is less than 6 MPa in a transverse direction of the film.

2. The mulch film of claim 1, wherein the film is configured to wrap the tip of the asparagus and at least a portion of the spear of the asparagus when the tip of the asparagus contacts the film and continues its growth.

3. The mulch film of claim 1 or 2, wherein a Young's modulus of the film is less than 100 MPa in at least one of a machine direction and a transverse direction of the film, and specifically between 30 and 85 MPa, and more specifically between 30 and 85MPa in each of the machine and transverse directions.

4. The mulch film of any of claims 1 - 3, wherein a secant modulus at 2% of the film is less than 90 MPa in at least one of a machine direction and a transverse direction of the film, and specifically between 30 and 85 MPa, and more specifically between 30 and 85 MPa in each of the machine and transverse directions.

5. The mulch film of any of claims 1 - 4, wherein an elongation at yield of the film is above 110% in a longitudinal direction of the film.

6. The mulch film of any of claims 1 - 5, wherein the film is configured to allow the asparagus to grow at least 10cm, specifically at least 12 cm, and more specifically at least 15 cm above the ground with a straight spear.

7. The mulch film of any of claims 1 - 6, wherein the film comprises one or more layers.

8. The mulch film of claim 7, wherein one of the layers is configured to degrade faster than another of the layers of the film.

9. The mulch film of claims 7 or 8, wherein one or more layers are biodegradable and/or compostable.

10. The mulch film of any of the preceding claims, wherein a thickness of the film is between 10-200 microns, in particular between 10 and 100 microns, and more in particular between 20 and 80 microns.

11. The mulch film of any of the preceding claims, further comprising one or more pockets along one or more edges of the film.

12. A method for using a mulch film for asparagus cultivation comprising:
extending the mulch film over a cultivation area of asparagus;
wherein the mulch film is configured to apply a force to the tip of an asparagus such that the tip keeps its shape and the spear of the asparagus remains straight when the tip emerges from the soil and contacts the film; and
wherein a tensile stress at yield point of the film is less than 6 MPa in a transverse direction of the film.

13. The method of claim 12, further comprising putting weight in one or more pockets along one or more edges of the film and/or burying one or more edges of the film.

14. The method of claims 12 or 13, further comprising collecting one or more asparagus, wherein collecting comprises picking asparagus whose tips and at least a portion of their spears have been wrapped by the mulch film when growing.

15. The method of any of claims 12 - 14, wherein a time period between two contiguous collections is of three days or more, in particular between three and eight days.
